(19) Europäisches Patentamt
European Patent Office
Office européen des brevets

(11) Veröffentlichungsnummer: **0 189 836**
**B1**

# (12) EUROPÄISCHE PATENTSCHRIFT

(45) Veröffentlichungstag der Patentschrift: **22.06.88**

(51) Int. Cl.⁴: **C 09 B 44/02,** D 21 H 3/80

(21) Anmeldenummer: **86100832.4**

(22) Anmeldetag: **22.01.86**

(54) **Basische Azofarbstoffe.**

(30) Priorität: **26.01.85 DE 3502693**

(43) Veröffentlichungstag der Anmeldung:
**06.08.86 Patentblatt 86/32**

(45) Bekanntmachung des Hinweises auf die Patenterteilung:
**22.06.88 Patentblatt 88/25**

(84) Benannte Vertragsstaaten:
**CH DE FR GB IT LI**

(56) Entgegenhaltungen:
**DE - A - 2 050 246**
**GB - A - 1 516 978**
**US - A - 3 020 272**

(73) Patentinhaber: **BASF Aktiengesellschaft,**
**Carl-Bosch-Strasse 38, D-6700 Ludwigshafen (DE)**

(72) Erfinder: **Colberg, Horst, Dr., Tilsiter Strasse 9,**
**D-6707 Schifferstadt (DE)**
Erfinder: **Hahn, Erwin, Dr., Am Büchsenackerhang 31,**
**D-6900 Heidelberg (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Aus der DE-A-2 050 246 sind kationische Azofarbstoffe bekannt, deren Diazokomponente sich von speziellen Anilinderivaten ableitet, die einen Alkoxycarbonylrest aufweisen, wobei die Alkylgruppe noch einen substituierten Ammoniumrest besitzt.

Es wurden nun neue Verbindungen der Formeln

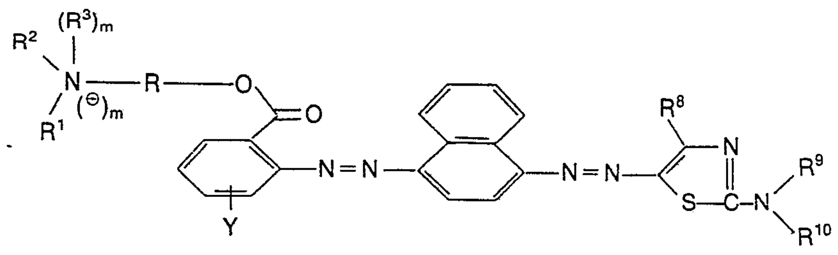

$(A^{\ominus})_m$ (Ia)

und

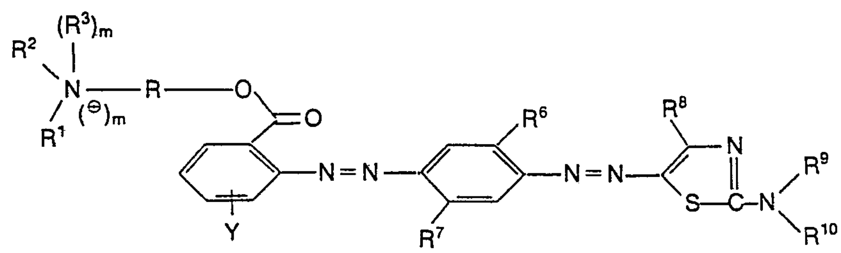

$(A^{\ominus})_m$ (Ib)

gefunden, in denen

Y Wasserstoff, Chlor, Brom oder Nitro,

R gegebenenfalls durch Sauerstoff oder

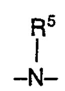

unterbrochenes Alkylen,

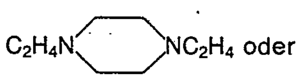 oder 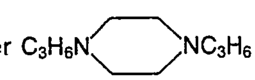 ,

m die Zahlen 0 oder 1,

$R^1$ und $R^2$ unabhängig voneinander Wasserstoff, gegebenenfalls substituiertes Alkyl, Alkenyl, Cycloalkyl, Aralkyl oder Aryl oder

$R^1$ und $R^2$ zusammen mit dem Stickstoff einen Heterocyclus,

$R^3$ Wasserstoff oder gegebenenfalls substituiertes Alkyl,

$R^6$ und $R^7$ unabhängig voneinander Wasserstoff, gegebenenfalls substituiertes Alkyl, Alkoxy oder Acylamino,

$R^8$ Wasserstoff, Acetyl, Benzoyl oder einen aliphatischen, cycloaliphatischen, aromatischen oder heterocyclischen Rest und

$R^9$ und $R^{10}$ unabhängig voneinander Wasserstoff, gegebenenfalls substituiertes Alkyl oder Cycloalkyl oder zusammen mit dem Stickstoff einen Heterocyclus und

$A^{\ominus}$ ein Anion bedeuten, wobei

$R^5$ für Wasserstoff oder $C^1$- bis $C_4$-Alkyl steht und der Rest

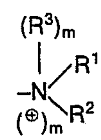

auch für einen 1-Pyridylrest stehen kann.

Gegebenenfalls substituierte Alkylenreste R haben z. B. 2 bis 10 C-Atome, bevorzugt sind $C_2$- oder $C_3$-Reste.

Im einzelnen sind beispielsweise zu nennen:

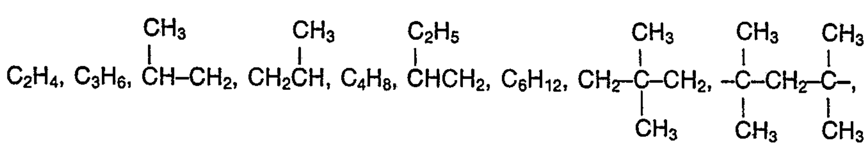

$C_2H_4OC_2H_4$, $C_3H_6C_3H_6$, $C_3H_6OC_2H_4OC_3H_6$, $C_3H_6OC_4H_8OC_3H_6$, $C_3H_6OC_2H_4OC_2H_4OC_3H_6$, $C_2H_4NHC_2H_4$, $C_2H_4NHC_3H_6$, $C_3H_6NHC_3H_6$, $C_3H_6NHC_2H_4NHC_3H_6$, $C_3H_6NHC_6H_{12}NHC_3H_6$,

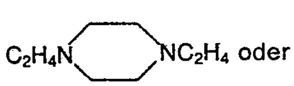 oder 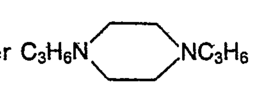 .

Für R sind z. B. bevorzugt: $C_2H_4$ oder $CH_2CH(CH_3)$.

Alkylreste $R^1$ und $R^2$ haben in der Regel 1 bis 14 C-Atome und können z. B. durch N-Cycloalkylamino, N,N-Di-$C_1$- bis -$C_5$-alkylamino, Hydroxy oder $C_1$- bis $C_8$-Alkoxy substituiert sein. Ferner sind Allyl, Methallyl oder $C_5$- bis $C_8$-Cycloalkyl zu erwähnen.

Im einzelnen seien beispielsweise neben den bereits aufgeführten folgende Reste genannt:

Methyl, Ethyl, n-Propyl, i-Propyl, n-Butyl, i-Butyl, n-Amyl, i-Amyl, n-Hexyl, i-Hexyl, Heptyl, Octyl, 2-Ethylhexyl, Decyl, Dodecyl, Tridecyl, Tetradecyl, 2-Hydroxyethyl, 2- oder 3-Hydroxypropyl, Hydroxybutyl, Cyclopentyl, Cyclohexyl oder Cyclooctyl, N,N-Dimethylaminoethyl, N,N-Diethylaminoethyl, N,N-Dipropylaminoethyl, N,N-Dibutylaminoethyl, 3-(N,N-Dimethylamino)-propyl, 3-(N,N-Diethylamino)-propyl, 3-(N,N-Dipropylamino)-propyl oder 3-(N,N-Dibutylamino)-propyl, N-Cyclohexylaminoethyl, 3-(N-Cyclohexylamino)-propyl, 3-(N-Cyclooctylamino)-propyl, N-Methyl-N-cyclohexylaminoethyl, 3-(N-Methyl-N-cyclohexylamino)-propyl, Benzyl, Phenethyl, Phenyl oder Tolyl.

$R^1$ und $R^2$ können zusammen mit dem Stickstoff z.B. die Reste folgender Heterocyclen bilden:

Pyrrolidin, Piperidin, Morpholin, Piperazin, das am Stickstoff durch Methyl, Ethyl, n- und i-Propyl, n-, i-, sec.-Butyl, 2-Hydroxyethyl, 2-Aminoethyl, 2- oder 3-Hydroxypropyl, 2- oder 3-Aminopropyl substituiert sein kann, Imidazol, das in 2- und/oder 4-Stellung durch Methyl, Ethyl, Propyl oder Butyl substituiert sein kann oder N-3-($C_1$- bis $C_{12}$)-Alkyl- oder Vinyl-imidazol, das in 2- und/oder 4-Stellung noch durch Methyl, Ethyl, Propyl oder Butyl substituiert sein kann.

Bevorzugte Reste $R^1$ und $R^2$ sind z.B.:

Methyl, Ethyl, n-Propyl, i-Propyl, $C_2$- oder $C_3$-Hydroxyalkyl oder Cyclohexyl.

Bevorzugte heterocyclische Reste

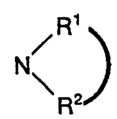

sind z.B. die von:

Morpholin, Piperidin, 4-Methylpiperazin, 4-Ethylpiperazin, 4-Hydroxyethylpiperazin, 4-(2'-Aminoethyl)-piperazin, Imidazol, 2-Methylimidazol oder 4-Methylimidazol.

Der Rest

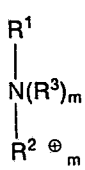

kann auch eine Gruppe der Formel

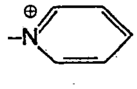

sein.

Für $R^3$ kommen daneben z.B. $C_1$- bis $C_{12}$-Alkyl oder $C_2$- bis $C_4$-Hydroxyalkyl wie Methyl, Ethyl, n- oder i-Propyl, n- oder i-Butyl, n- oder i-Amyl, n- oder i-Hexal, Octyl, 2-Ethylhexyl, Decyl, Dodecyl, 2-Hydroxyethyl, 2- oder 3-Hydroxypropyl, Hydroxybutyl, Benzyl, $CH_2CH_2(OH)CH_2Cl$ oder $CH_2CH(OH)CH_2OH$ in Betracht.

Vorzugsweise steht $R^3$ für $C_1$- bis $C_4$-Alkyl, $C_2$- bis $C_4$-Hydroxyalkyl oder Benzyl.

Für $R^3$ sind Methyl, Ethyl und $C_2$- oder $C_3$-Hydroxyalkyl besonders bevorzugt.

Die $R^6$ und $R^7$ tragenden Reste sind Phenylenreste der Formel II

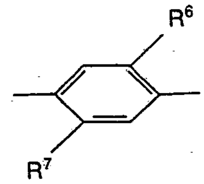

II

Reste der Formel II sind insbesondere die durch Methyl, Methoxy, Ethoxy oder Acylamino einfach oder zweifach substituierten 1,4-Phenylenreste, wobei Acylamino z.B. für $NHCOCH_3$, $NHCOC_2H_5$, $NHCOC_6H_5$, $NHCONH_2$, $NHCON(CH_3)_2$ oder $NHCONHC_6H_5$ steht. Besonders bevorzugt sind $NHCOCH_3$ oder $NHCONHC_6H_5$ sowie die Kombination $CH_3/OCH_3$.

Reste $R^8$ sind beispielsweise gegebenenfalls durch Chlor, Brom, Cyan, Hydroxy, $C_1$- bis $C_4$-Alkoxy, $C_1$- bis $C_4$-Alkoxycarbonyl, $C_1$- bis $C_4$-Alkylmercapto, Phenoxy, Sulfophenoxy, Phenylmercapto, Amino, N-mono- oder N,N-di-$C_1$- bis $C_4$-alkylamino, Phenylamino, Sulfophenylamino, $C_1$- bis $C_4$-Alkanoylamino oder Sulfoethylamino substituiertes $C_1$- bis $C_4$-Alkyl, Vinyl, Cyclohexyl, gegebenenfalls durch Fluor, Chlor, Brom, Hydroxy, $C_1$- bis $C_4$-Alkoxy, β-$C_1$- bis $C_4$-Alkanoyloxyethoxy, β-Cyanethoxy, β-Carboxylethyloxy, β-$C_1$- bis $C_4$-Alkoxycarbonylethoxy, Phenoxy, Sulfophenoxy, $C_1$- bis $C_4$-Alkylmercapto, Phenylmercapto, Amino, β-$C_1$- bis $C_4$-Alkanoylamino, Benzoylamino, $C_1$- bis $C_4$-Alkylamino oder -Dialkylamino, Phenylamino, Sulfophenylamino, $C_1$- bis $C_4$-Alkylsulfonylamino oder Phenylsulfonylamino substituiertes Phenyl, Thienyl oder Thiazolyl.

Einzelne Reste $R^8$ sind z.B.:

$CH_3$, $C_2H_5$, $CH_2Cl$, $CH_2CN$, $CH_2OH$, $CH_2{-}CH_2Cl$, $CH_2{-}CH_2OH$, $CH_2{-}CH_2CN$, $CH_2{-}COOCH_3$, $CH_2COOC_2H_5$, $-CH_2OCH_3$, $-CH_2OC_2H_5$, $CH_2SCH_3$, $CH_2N(CH_3)_2$, $C_6H_5OCH_2$, $C_6H_5$, $ClC_6H_4$, $BrC_6H_4$, $FC_6H_4$, $Cl_2C_6H_3$, $CH_3C_6H_4$, $(CH_3)_2C_6H_3$, $CH_3OC_6H_4$, $C_2H_5OC_6H_4$, $NCC_2H_4OC_6H_4$, $CH_3OOC{\cdot}C_2H_4OC_6H_4$, $H_2NCOC_2H_4OC_6H_4$, $CH_3COOC_2H_4OC_6H_4$, $HOC_2H_4OC_6H_4$, $HOC_6H_4$, $C_6H_5OC_6H_4$, $CH_3SC_6H_4$, $C_6H_5SC_6H_4$, $NC{-}C_2H_4SC_6H_4$, $CH_3CONHC_6H_4$, $C_2H_5CONHC_6H_4$, $H_2N{-}C_6H_4$, $HOC_2H_4NHC_6H_4$, $(C_2H_5)_2NC_6H_4$, $CH_3SO_2NHC_6H_4$, $C_6H_5SO_2NHC_6H_4$, $C_6H_5NHC_6H_4$,

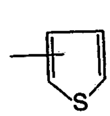 , 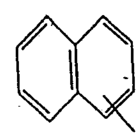 .

Reste $R^8$ sind bevorzugt $C_1$- bis $C_4$-Alkyl, β-Carboxymethyl oder gegebenenfalls durch Chlor, Brom, Methyl, Ethyl, $C_1$- bis $C_4$-Alkoxy, β-Cyanethoxy, β-Carboxylethoxy, Phenoxy, Sulfophenoxy, $C_1$- bis $C_4$-Alkanoylamino, Phenylamino, Sulfophenylamino oder Sulfoethylamino substituiertes Phenyl.

Reste $R^9$ und $R^{10}$ sind z.B. $C_1$- bis $C_8$-Alkylreste, die noch durch Sauerstoff unterbrochen und durch

Hydroxy, Carboxy, Cyan, Chlor, Brom, Phenyl, $C_1$- bis $C_8$-Alkoxy, $C_1$- bis $C_4$-Alkanoyloxy, $C_1$- bis $C_4$-Alkoxycarbonyl, $C_1$- bis $C_4$-Alkanoylamino, Acetyl, $C_1$- bis $C_4$-Alkylaminocarbonyloxy, Arylaminocarbonyloxy, $C_1$- bis $C_4$-Alkoxycarbonyloxy oder Phenoxycarbonyloxy substituiert sein können, Allyl, Methallyl, Propargyl, Cyclohexyl, Phenyl-$C_1$- bis $C_5$-alkyl oder gegebenenfalls durch Fluor, Chlor, Brom, $C_1$- bis $C_4$-Alkoxycarbonyl, Nitro oder $C_1$- bis $C_4$-Alkanoylamino substituiertes Phenyl.

Einzelne Reste $R^9$ und $R^{10}$ sind neben den bereits genannten beispielsweise: Wasserstoff, Methyl, Ethyl, Propyl, Butyl, β-Hydroxyethyl, β-Methoxyethyl, γ-Methoxypropyl, β-Cyanethyl, β-Carbomethoxyethyl, β-Carboethoxyethyl, β-Acetoxyethyl, β-Ethoxycarbonylethyl, γ-Acetylaminopropyl, Phenoxycarbonyloxyethyl, Phenylaminocarbonyloxyethyl, Butylaminocarbonyloxyethyl, Benzyl, β-Phenethyl, Phenyl, Sulfophenyl, Disulfophenyl, Acetylaminophenyl, Carboxyphenyl, Cyanphenyl, Chlorphenyl oder Sulfethyl.

$R^9$ und $R^{10}$ zusammen mit dem Stickstoff sind z.B. gegebenenfalls durch O, N oder S unterbrochenes Oligomethylenimino, wie z.B. Pyrrolidino, Piperidino, Morpholino, Piperazino, α-Methylpiperazino, Hexamethylenimino oder Thiomorpholino-S-dioxid.

Bevorzugt sind für $R^9$ und $R^{10}$ unabhängig voneinander $C_1$- bis $C_8$-Alkyl, durch Hydroxy, Carboxy, Hydroxysulfonyl, Cyan, Phenyl, $C_1$- bis $C_8$-Alkoxy, Phenoxy, $C_1$- bis $C_4$-Alkanoyloxy, $C_1$- bis $C_4$-Alkoxycarbonyl, $C_1$- bis $C_4$-Alkanoylamino oder $C_1$- bis $C_4$-Alkoxycarbonyloxy substituiertes $C_2$- bis $C_8$-Alkyl, Allyl, Phenyl-$C_1$- bis $C_5$-Alkyl oder gegebenenfalls durch Chlor, Brom, $C_1$- bis $C_4$-Alkyl, $C_1$- bis $C_4$-Alkoxy, Cyan oder Carbamoyl substituiertes Phenyl sowie für ($NR^9R^{10}$) Pyrrolidino, Piperidino, Piperazino oder Morpholino.

Anionen $A^{\ominus}$ sind z.B.: Chlorid, Bromid, Hydrogensulfat, Sulfat, Nitrat, Phosphat, Hydrogenphosphat, Dihydrogenphosphat, Carbonat, Hydrogencarbonat, Tetrachlorozinkat, Aminosulfonat, Methylsulfonat, Methylsulfat, Ethylsulfat, Formiat, Acetat, Hydroxyacetat, Aminoacetat, Methoxyacetat, Propionat, Lactat, Maleinat, Malonat, Citrat, Benzoat, Phthalat, Benzolsulfonat, Toluolsulfonat, Oleat oder Dodecylbenzolsulfonat.

Zur Herstellung der Verbindungen der Formeln Ia und Ib kann man Aminoverbindungen der Formeln

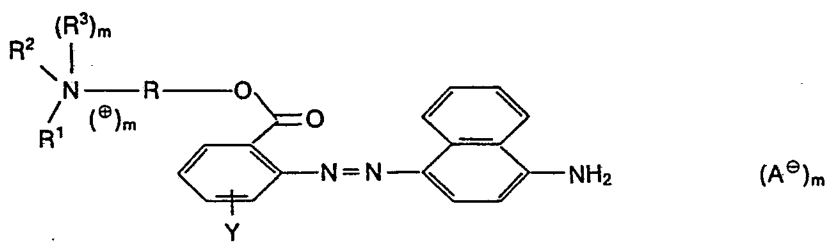

(Ia)

und

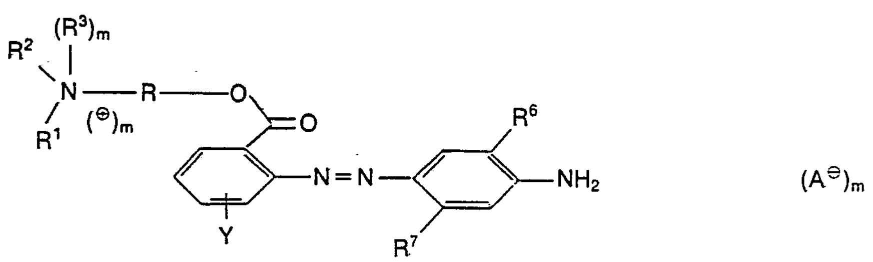

(Ib)

diazotieren und mit der Kupplungskomponente der Formel

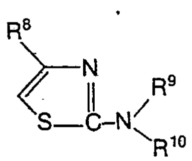

umsetzen.

Einzelheiten der Herstellung können den Beispielen entnommen werden, in denen sich Angaben über Teile und Prozente, sofern nichts anders vermerkt, auf das Gewicht beziehen.

Die Verbindungen der Formeln Ia und Ib eignen sich zum Färben von sauer modifizierten Fasern wie Polyacrylnitril oder Polyestern, Leder und insbesondere Papier. Auch lässt sich insbesondere Papier mit Druckfarben bedrucken, die wässrige saure Lösungen von Ia und Ib enthalten. In Form der Basen oder Salze mit längerkettigen Carbon- oder Sulfonsäuren wie Ölsäure oder Dodecylbenzolsulfosäure kommen sie auch z.B. für Kugelschreiberpasten, Solventfarbstoffe oder nicht wässrige Druckfarben in Betracht. Mit entsprechenden Anionen sind die Farbstoffe auch leicht in Wasser und organischen Lösungsmitteln löslich, so dass sie sich zur Herstellung von flüssigen Konzentraten eignen.

Von besonderer Bedeutung sind Verbindungen der Formeln (Ia) und (Ib), in denen bedeuten:

Y: Wasserstoff oder Nitro;

R: $C_2H_4$, $C_3H_6$, $-CH(CH_3)CH_2$ oder $C_4H_8$;

$R^1$ und $R^2$: H, $CH_3$, $C_2H_5$, n-, i-$C_3H_7$, n-, i-, sec.-$C_4H_9$, $C_2H_4OCH_3$,

$C_2H_4OCH_3$, 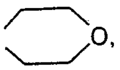, 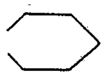,

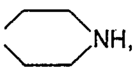, 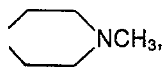,

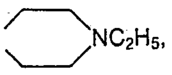, 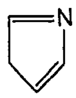

oder Cyclohexyl;

$R^3$: $CH_3$, $C_2H_5$ oder $C_2H_4OH$;

$R^6$ und $R^7$: H, $CH_3$, $OCH_3$, $OC_2H_5$.

$R^8$: $C_1$- bis $C_4$-Alkyl, β-Carboxymethyl oder gegebenenfalls durch Chlor, Brom, Methyl, Ethyl, $C_1$- bis $C_4$-Alkoxy, β-Cyanethoxy, β-Carboxylethoxy, Phenoxy, Sulfophenoxy, $C_1$- bis $C_4$-Alkanoylamino, Phenylamino, Sulfophenylamino oder Sulfoethylamino substituiertes Phenyl. Besonders bevorzugt ist Phenyl.

$R^9$ und $R^{10}$: $C_1$- bis $C_8$-alkyl, durch Hydroxy, Carboxy, Hydroxysulfonyl, Cyan, Phenyl, $C_1$- bis $C_8$-Alkoxy, Phenoxy, $C_1$- bis $C_4$-Alkanoyloxy, $C_1$- bis $C_4$-Alkoxycarbonyl, $C_1$- bis $C_4$-Alkanoylamino oder $C_1$- bis $C_4$-Alkoxycarbonyloxy substituiertes $C_2$- bis $C_8$-Alkyl, Allyl, Phenyl-$C_1$- bis $C_5$-Alkyl oder gegebenenfalls durch Chlor, Brom, $C_1$- bis $C_4$-Alkyl, $C_1$- bis $C_4$-Alkoxy, Cyan oder Carbamoyl substituiertes Phenyl und $NR^9R^{10}$ gegebenenfalls durch O oder N unterbrochenes Oligomethylenimino. Besonders bevorzugt für $R^9$ und $R^{10}$ sind Wasserstoff, Phenyl, Methyl, Ethyl oder Propyl, sowie für $NR^9R^{10}$ Morpholino, Piperazino oder Piperidino.

## Beispiele

### Beispiel 1

208 Teile Anthranilsäure-2'-dimethylaminoethylester werden mit 500 Teilen Eis angerührt. Unter Aussenkühlung werden 500 Teile konz. Salzsäure, dann unterhalb 5 °C 300 Volumenteile 23-proz. wässrige Natriumnitritlösung zugegeben. Bei 10–15 °C rührt man drei Stunden, zerstört danach überschüssiges Nitrit durch Zugabe von Amidosulfonsäure und tropft eine Lösung von 129 Teilen 1-Naphthylamin in 250 Teilen Eisessig zu. Man lässt über Nacht auf Raumtemperatur kommen, saugt ab und wäscht mit 20-proz. Kochsalzlösung. Der Filterkuchen wird mit 500 Teilen Eis und 200 Teilen konz. Salzsäure angerührt. 300 Volumenteile 23-proz. wässrige Natriumnitritlösung werden zugetropft, wobei der pH-Wert durch Salzsäurezugabe unter 1 gehalten wird. Man rührt eine Stunde bei Raumtemperatur nach, zerstört überschüssiges Nitrit und tropft dann eine Lösung von 250 Teilen 2-Diethylamino-4-phenyl-1,3-thiazol in 200 Teilen Eisessig zu. Durch Zugabe von Natriumacetat wird ein pH von ungefähr 4,5 eingestellt und zwei Stunden nachgerührt. Danach saugt man ab, wäscht mit 20-proz. wässriger Kochsalzlösung, rührt den Filterkuchen in Ammoniakwasser auf, saugt wieder ab und wäscht mit Wasser. Nach der Gefriertrocknung werden 1203 g der mit Salz verunreinigten Farbstoffs der Formel

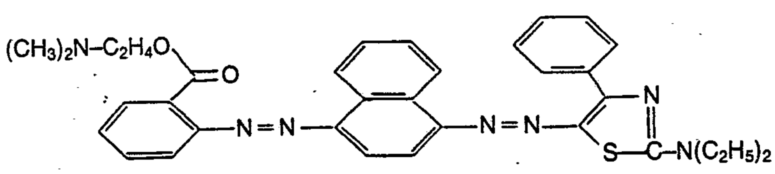

erhalten. Schmelzpunkt 75 °C, λmax (50-proz. Essigsäure) = 584

Der Farbstoff lässt sich mit Eisessig und Wasser zu einer Flüssigeinstellung auflösen. Er färbt Papierstoff intensiv blau im Farbton No. 13, Colour Index Hue Indication Chart. Das Abwasser ist farblos. Das gefärbte Papier lässt sich mit Hypochlorit bleichen. Die Ausbluteechtheit gegen wässrige Sodalösung und Wasser ist auch in tiefen Tönen hervorragend, die gegen wässrige Essigsäure sehr gut.

Analog dem beschriebenen Verfahren lassen sich weitere Farbstoffe herstellen, die im Farbton und der Affinität zu Papierstoff weitgehend der obigen Verbindung entsprechen.

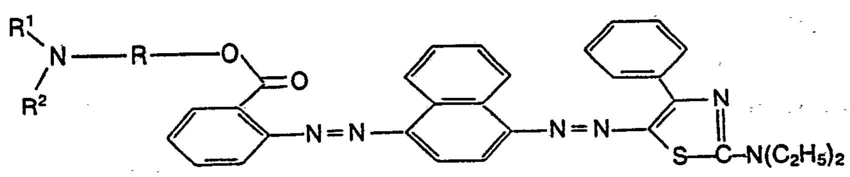

| Beispiel Nr. | $-R-NR^1R^2$ |
|---|---|
| 2 | $-C_2H_4N(CH_3)_2$ |
| 3 | $-C_2H_4N(C_2H_5)_2$ |
| 4 | $-C_2H_4N(C_3H_7)_2$ |
| 5 | $-C_2H_4N(CH{<}^{CH_3}_{CH_3})_2$ |
| 6 | $-C_2H_4N(C_4H_9)_2$ |

| Beispiel Nr. | $-R-NR^1R^2$ |
|---|---|
| 7 | $-C_2H_4N(CH_2\underset{CH_3}{CH}-CH_3)_2$ |
| 8 | $-C_2H_4N(\underset{CH_3}{CH}-C_2H_5)_2$ |
| 9 | $-C_2H_4NHCH_3$ |
| 10 | $-C_2H_4NHC_2H_5$ |

| Beispiel Nr. | $-R-NR^1R^2$ |
|---|---|
| 11 | $-C_2H_4N\ \ (CH_2)_5$ |
| 12 | $-C_2H_4N\ \ (CH_2)_6$ |
| 13 | 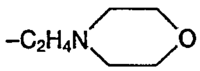 |
| 14 | 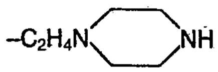 |
| 15 | 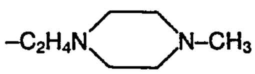 |
| 16 | 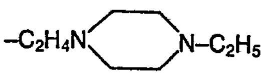 |
| 17 | 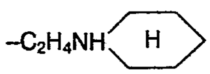 |
| 18 | 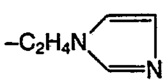 |
| 19 | $-C_2H_4N(C_2H_4OCH_3)_2$ |
| 20 | $-C_2H_4N(C_2H_4OC_2H_5)_2$ |
| 21 | $-CH-CH_2-N(CH_3)_2$<br>$CH_3$ |
| 22 | $-CH-CH_2-N(C_2H_5)_2$<br>$CH_3$ |
| 23 | $-CH-CH_2-N(C_3H_7)_2$<br>$CH_3$ |
| 24 | $-CH-CH_2-N(CH-CH_3)_2$<br>$CH_3 \quad CH_3$ |
| 25 | $-CH-CH_2-N(C_4H_9)_2$<br>$CH_3$ |
| 26 | $-CH-CH_2-N(CH_2-CH-CH_3)_2$<br>$CH_3 \quad CH_3$ |
| 27 | $-CH-CH_2-N(CHCH_2CH_2)_2$<br>$CH_3 \quad CH_3$ |
| 28 | $-CH-CH_2-NHCH_3$<br>$CH_3$ |
| 29 | $-CH-CH_2-NHC_2H_5$<br>$CH_3$ |
| 30 | 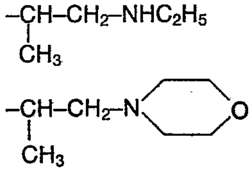 |
| 31 | 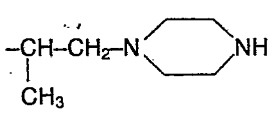 |
| 32 | 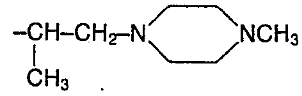 |
| 33 | 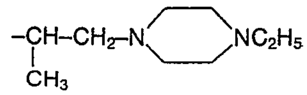 |
| 34 | 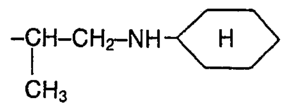 |
| 35 | 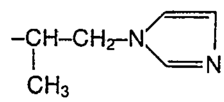 |
| 36 | $-CH-CH_2-N(C_2H_4OCH_3)_2$<br>$CH_3$ |
| 37 | $-C_3H_6N(CH_3)_2$ |
| 38 | $-C_3H_6N(C_2H_5)_2$ |
| 39 | 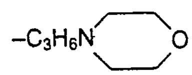 |
| 40 | 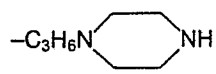 |
| 41 | 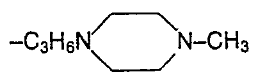 |
| 42 | $-CH_2CH-N(CH_3)_2$<br>$C_2H_5$ |
| 43 | $-CH_2CH-N(C_2H_5)_2$<br>$C_2H_5$ |
| 44 | $-CH_2CH-N(C_3H_7)_2$<br>$C_2H_5$ |
| 45 | 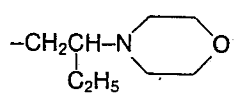 |
| 46 | 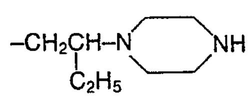 |
| 47 | 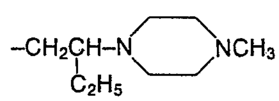 |
| 48 | $-C_4H_8-N(CH_3)_2$ |
| 49 | $-C_4H_8-N(C_2H_5)_2$ |
| 50 | $-C_4H_8-N(C_3H_7)_2$ |
| 51 | 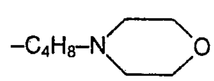 |

| Beispiel Nr. | $-R-NR^1R^2$ |
|---|---|
| 52 | 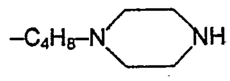 |
| 53 | 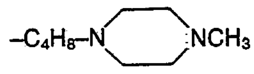 |

Analog Beispiel 1 lassen sich aus den entsprechenden halogenierten bzw. sulfochlorierten Derivaten des Isatosäureanhydrids weitere Farbstoffe herstellen, die Papier blau färben.

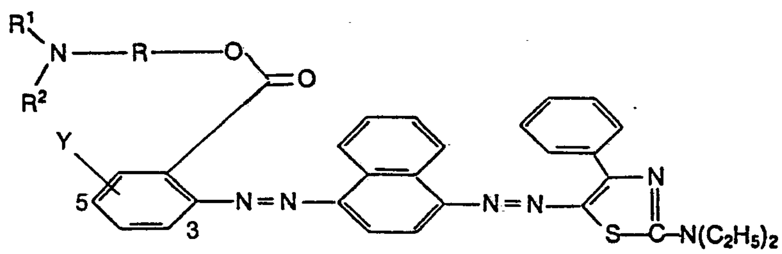

| Bsp.-Nr. | $COOR-NR^1R^2$ | Y |
|---|---|---|
| 54 | $COOC_2H_4N(CH_3)_2$ | 5–Cl |
| 55 | 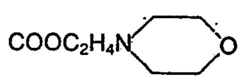 | 5–Cl |
| 56 | $COOC_2H_4N(CH_3)_2$ | 5–Br |
| 57 | 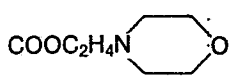 | 5–Br |

Beispiel 58

Herstellung der Diazokomponente: Nach Beispiel 1 hergestellte Diazokomponente wird destilliert. 21 Teile werden in 100 Teilen Toluol tropfenweise bei 60 °C mit 13 Teilen Dimethylsulfat versetzt. Man rührt eine Stunde bei dieser Temperatur nach, kühlt auf Raumtemperatur und saugt den Niederschlag ab. Nach der Trocknung beträgt das Diazotierungsäquivalent 355 g/val (Theorie 334 g/val). Die Verbindung entspricht der Formel

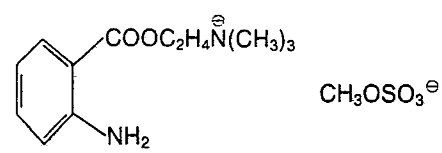

Nach Diazotierung und Kupplung analog Beispiel 1 stellt man mit Natronlauge alkalisch, dekantiert die wässrige Phase vom schmierigen Farbstoff und löst in wässrigem Eisessig. Der Farbstoff färbt Papierstoff blau bei mässiger Abwasseranfärbung und entspricht nun der Formel

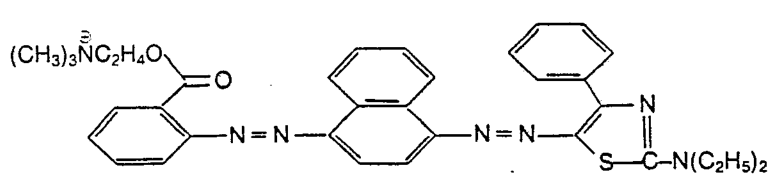

Beispiel 59

Einer Suspension von 50 Teilen gebleichtem Sulfatzellstoff von ca. 30° SR in 2000 Teilen Wasser bei pH 7 werden 2 Teile einer 10-proz. essigsauren Lösung des Farbstoffs aus Beispiel 1 zugegeben. Das Gemisch wird 15 Minuten bei 20 bis 25 °C gerührt und dann mit Wasser auf 0,2% Feststoffgehalt verdünnt. Mit dieser Suspension werden auf einem Laborblattbildner Papierblätter hergestellt und die Blätter 5 Minuten bei 10 °C getrocknet. Man erhält blau gefärbte Blätter. Das Abwasser ist farblos, die Ausblutechtheit gegen

Wasser und wässrige Sodalösung hervorragend, gegen Essigsäure gut.

Verwendung der Farbstoffe aus den anderen Beispielen erbringt ähnlich gute Färbeergebnisse.

Beispiel 60

In eine gerührte Suspension aus 100 Teilen eines Gemisches von 70% gebleichtem Kiefernsulfatzellstoff und 30% gebleichtem Birkensulfatzellstoff mit ca. 30° SR im Gesamtstoff in 2000 Teilen Wasser werden 1,0 Teile des Vermahlungsproduktes aus 90% Farbstoff nach Beispiel 1 und 10% Amidosulfonsäure eingestreut und 10 Minuten verrührt. Nach Verdünnung mit Wasser auf 0,2% Feststoffgehalt werden auf einem Laborblattbildner Papierblätter hergestellt und die Blätter 5 Minuten bei 100°C getrocknet. Man erhält gleichmässig blau gefärbte Blätter mit hervorragender Ausblutechtheit gegen Wasser. Verwendung von Vermahlungsprodukten der Farbstoffe aus Beispiel 2–70 mit Amidosulfonsäure erbringt ähnlich gute Färbeergebnisse.

Beispiel 61

Eine saugfähige Papierbahn aus ungeleimten Papier wird bei 40–50°C durch eine Farbstofflösung gezogen, die sich zusammensetzt aus 0,5 Teilen Farbstoff aus Beispiel 1, 0,5 Teilen Stärke, 3 Teilen Essigsäure und 96 Teilen Wasser. Die überschüssige Farbstofflösung wird zwischen zwei Walzen abgepresst. Die getrocknete Papierbahn ist blau gefärbt.

Analog können auch die Farbstoffe aus den anderen Beispielen eingesetzt werden.

**Patentansprüche**

1. Verbindungen der Formeln

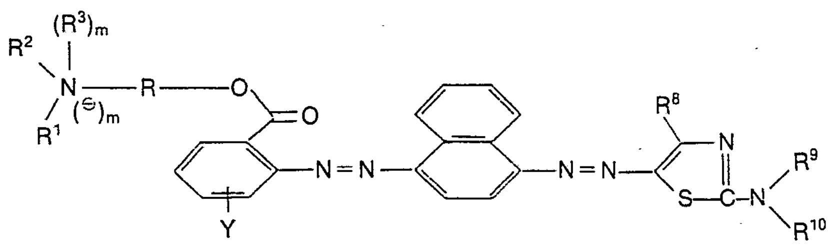

$(A^{\ominus})_m$ (Ia)

und

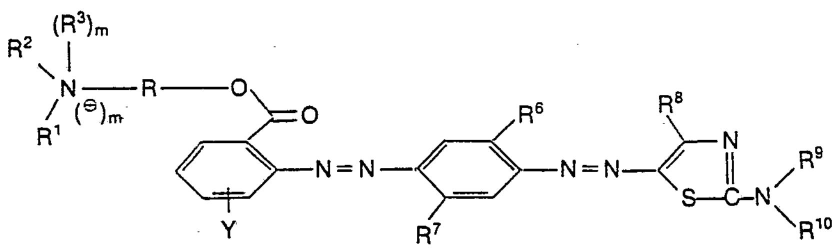

$(A^{\ominus})_m$ (Ib),

in denen

Y Wasserstoff, Chlor, Brom oder Nitro,

R gegebenenfalls durch Sauerstoff oder

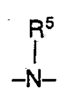

unterbrochenes Alkylen,

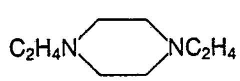 oder 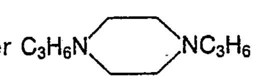 ,

m die Zahlen 0 oder 1,

$R^1$ und $R^2$ unabhängig voneinander Wasserstoff, gegebenenfalls substituiertes Alkyl, Alkenyl, Cycloalkyl, Aralkyl oder Aryl oder

$R^1$ und $R^2$ zusammen mit dem Stickstoff einen Heterocyclus,

$R^3$ Wasserstoff oder gegebenenfalls substituiertes Alkyl,

$R^6$ und $R^7$ unabhängig voneinander Wasserstoff, gegebenenfalls substituiertes Alkyl, Alkoxy oder Acylamino,

$R^8$ Wasserstoff, Acetyl, Benzoyl oder einen aliphatischen, cycloaliphatischen, aromatischen oder heterocyclischen Rest,

$R^9$ und $R^{10}$ unabhängig voneinander Wasserstoff, gegebenenfalls substituiertes Alkyl oder Cycloalkyl oder zusammen mit dem Stickstoff ein Heterocyclus und

$A^{\ominus}$ ein Anion bedeuten, wobei

$R^5$ für Wasserstoff oder $C_1$- bis $C_4$-Alkyl steht und der Rest

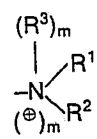

auch für einen 1-Pyridylrest stehen kann.

2. Verwendung der Verbindungen gemäss Anspruch 1 zum Färben von Papier.

**Claims**

1. Compounds of the formulae

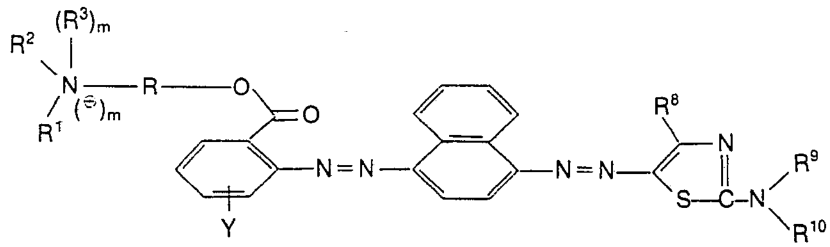

$(A^{\ominus})_m$ (Ia)

and

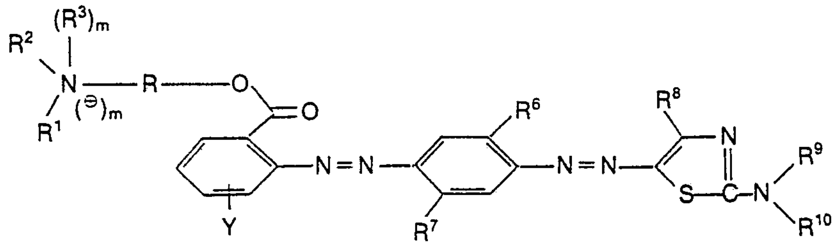

$(A^{\ominus})_m$ (Ib)

where Y is hydrogen, chlorine, bromine or nitro, R is alkylene which may or may not be interrupted by oxygen or

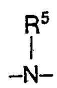

or is

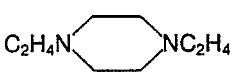 or 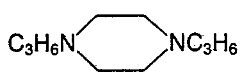

m is 0 or 1,

$R^1$ and $R^2$ independently of one another are each hydrogen, unsubstituted or substituted alkyl, alkenyl, cycloalkyl, aralkyl or aryl, or $R^1$ and $R^2$ together with the nitrogen form a heterocyclic structure, $R^3$ is hydrogen or unsubstituted or substituted alkyl, $R^6$ and $R^7$ independently of one another are each hydrogen, unsubstituted or substituted alkyl, alkoxy or acylamino, $R^8$ is hydrogen, acetyl, benzoyl, or an aliphatic, cycloaliphatic, aromatic or heterocyclic radical, $R^9$ and $R^{10}$ independently of one another are each hydrogen, unsubstituted or substituted alkyl or cycloalkyl, or together with the nitrogen form a heterocyclic structure and $A^-$ is an anion, where $R^5$ is hydrogen or $C_1$–$C_4$-alkyl and the radical

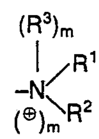

may furthermore be 1-pyridyl.

2. Use of the compounds as claimed in claim 1 for dyeing paper.

**Revendications**

1. Composés de formules

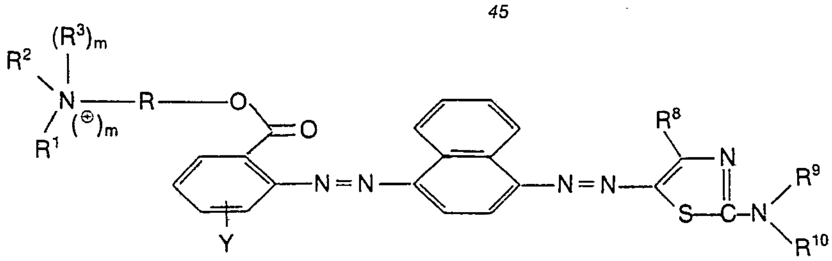

$(A^{\ominus})_m$ (Ia)

et

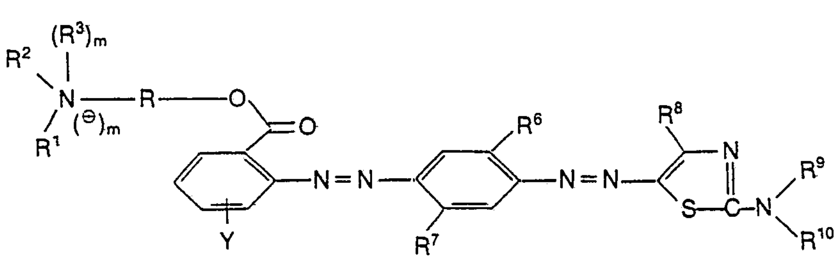

$(A^{\ominus})_m$ (Ib),

dans lesquelles

Y représente un atome d'hydrogène, de chlore, de brome ou un groupe nitro,

R représente un radical alkylène éventuellement interrompu par un atome d'oxygène ou par

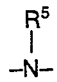

un groupement

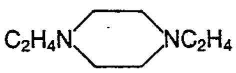 ou 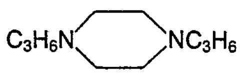 ,

m est mis pour les nombres 0 ou 1,

$R^1$ et $R^2$ représentent, indépendamment l'un de l'autre, un atome d'hydrogène, un groupe alkyle éventuellement substitué, alcényle, Cycloalkyle, aralkyle ou aryle ou

$R^1$ et $R^2$ forment, avec l'atome d'azote, un hétérocycle,

$R^3$ représente un atome d'hydrogène ou un radical alkyle éventuellement substitué

$R^6$ et $R^7$ représentent, indépendamment l'un de l'autre, un atome d'hydrogène, un radical alkyle éventuellement substitué, alcoxy ou acylamino,

$R^8$ représente un atome d'hydrogène, un groupe acétyle, benzoyle ou un radical aliphatique, cycloaliphatique, aromatique ou hétérocyclique,

$R^9$ et $R^{10}$ représentent, indépendamment l'un de l'autre, un atome d'hydrogène, un radical alkyle ou cycloalkyle éventuellement substitué ou forment avec l'atome d'azote un hétérocycle et

$A^{\ominus}$ représente un anion,

$R^5$ étant mis pour un atome d'hydrogène ou un radical alkyle en $C_1$ à $C_4$ et le radical

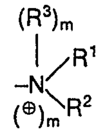

pouvant être également mis pour un radical λ-pyridyle.

2. Utilisation des composés selon la revendication 1 pour la coloration de papier.